# EUROPEAN PATENT APPLICATION

(11) **EP 0 578 598 A2**
(43) Date of publication of application: **12.01.1994**
(21) Application number: 93480065.7
(22) Date of filing: 03.06.1993
(51) Int. Cl.: G11B 5/55, G11B 21/10

(54) **Hybrid servo pattern and demodulation system for direct access storage device actuator positioning**

(30) Priority: 06.07.1992 US 909273
(71) Applicant: International Business Machines Corporation, Armonk, N.Y. 10504 (US)
(72) Inventor: Erickson, Kevin Jack, Rochester MN 55901 (US); Greenberg, Richard, Rochester MN 55906 (US)
(74) Representative: de Pena, Alain

(57) **Abstract**

A hybrid servo actuator positioning system that simultaneously demodulates servo burst amplitude and phase information in each sector. Servo burst amplitude demodulation is used for conventional track-following. Servo burst phase information is used for high-speed seeking of the target track without resorting to decoding a complete Gray code sector identification field. The disclosed hybrid servo system provides more actuator positioning information in less disk space than do conventional systems employing amplitude servo demodulation or phase servo demodulation alone.

## Description

### BACKGROUND OF THE INVENTION

### 1. Field of the Invention

This invention relates to Direct Access Storage Device (DASD) track seeking and centering systems and, more particularly, to efficient servo patterns for actuator positioning.

### 2. Description of the Related Art

There are two general forms of servo patterns and demodulation techniques available for generating actuator position information in Direct Access Storage Device (DASD) file systems. The earliest of these is the Amplitude Burst servo pattern that uses an amplitude demodulation process. Two or more circumferentially separated servo signal bursts are disposed such that they are detected in sequence, having a radial separation of a certain proportion of the track spacing. The more recent Phase-Encoded servo pattern uses a phase demodulation process. Again, two or more circumferentially sequential phase-encoded signal bursts are disposed such that they are sequentially detected, having a radial separation of a certain proportion of the track spacing. Both of these servo pattern schemes are embedded within a particular information format written on rotating DASD storage disks in any of several well-known manners.

Sensor actuator positioning using servo data is accomplished in two stages: coarse positioning or track seeking, in which the sensor is directed from a random location to a selected track; and fine positioning or track following, during which the sensor, already near the selected track, is maintained in a centered position with respect to the track centerline. Preferably the track is divided into a plurality of sectors of equal angular dimension, with servo burst fields information repeated in each sector. The advantage of such distributed servo burst schemes is that the servo information resides on the same track as the data itself. The fundamental problem with such schemes is that the servo burst fields occupy storage area that otherwise would be available for recording data.

Both the amplitude burst and phase-encoded servo tracking systems have particular advantages and disadvantages with respect with one another. The amplitude burst system operates well with signal bursts that are relatively high in frequency because the positional information is entirely available from the servo burst amplitude alone. This independence of frequency and phase permits extension of the amplitude burst system to a wider variety of DASD designs. Conversely, the cylinder identification modulus of amplitude burst systems is limited to the one or two cylinders that can be non-ambiguously discriminated with servo burst signal amplitude alone. This low identification modulus means that an additional cylinder number or sector identification field such as the well-known Gray code cylinder number is necessary for coarse positioning information during track seeking. Such additional fields consume significant disk space, thereby negating some of the spatial efficiency benefits of the amplitude burst system.

The phase-encoded system can operate with a substantially higher cylinder identification modulus than the one or two cylinders available with amplitude burst encoding because many different signal phases can be encoded in radial sequence. Thus, the phase-encoded system typically does not require a Gray code field to discriminate among the cylinders within the larger cylinder modulus blocks. But the number of different usable signal phases is limited by the capability to accurately record small phase changes in each servo burst at relatively high frequencies while maintaining acceptable adjacent track phase change coherence. This is because the phase-encoded bursts are written side by side on adjacent tracks or sectors. Also, use of larger numbers of different phases reduces the positional resolution and signal-to-noise ratio available for the fine track-following positioning using the phase-encoded bursts. These problems can be mitigated with longer phase-encoded bursts or the addition of a Gray code field, but both techniques consume more disk space.

The existing art is replete with proposals and teachings for increasing the storage capacity of DASDs and similar rotating storage devices. Although most of the knowledge in the art is intended for DASD files using magnetic data storage techniques, the principles are equally useful for rotating data storage devices using optical data storage and retrieval techniques.

Improvements to the amplitude burst system for sector seek and track following include U.S. patent 4,516,177 issued to William G. Moon et al and U.S. patent 4,823,212 issued to Vernon L. Knowles et al. Moon et al teach the use of a combination of optical encoder and amplitude burst servo sector surfaces on at least one of a plurality of rotating data storage disks in a low cost sensor actuator tracking system. Knowles et al teach a system for normalizing the servo code amplitude burst in a disk drive that includes an improved dual-frequency embedded servo code format with an automatic gain control field.

In U.S. patent 4,688,118, Vernon L. Knowles et al teach a servo gain compensation technique for minimizing servo gain variations from one data sensor transducer to another by using servo burst patterns and methods that permit magnetic sensor transducers of differing widths to overlap an invariant servo burst area.

In U.S. patent 4,539,608, John P. Hill et al teach a low offset position demodulator that can be used for sensor actuator positioning in a DASD. Hill et al teach the combination of a phase-locked loop and low-pass filter for eliminating undesirable DC offset positioning errors in an amplitude burst demodulator.

In U.S. patent 4,616,275, Bradford D. Peeters discloses a servo pattern and servo detector for use in sector access and tracking on a magnetic disk storage device. Peeters teaches the use of a 1F-2F servo pattern permitting the servo detector to generate a position signal proportional in amplitude and polarity to the extent and direction that the data sensor transducer is offtrack, essentially detecting and thresholding a single servo burst signal instead of balancing two servo burst signals as in the typical amplitude burst demodulator.

In U.S. patent 3,534,344, George R. Santana discloses an early magnetic amplitude burst system for track following. Santana suggests recording oppositely-poled constant fluxes subject to periodically occurring data frequency flux reversals to better separate servo burst signals on adjacent tracks.

In U.S. patent 4,085,427, David Dunn proposes a data sensor actuator positioning system wherein a pair of amplitude burst signals are first pre-processed to equalize the DC offset errors in each and then further processed by peak detection means to develop an actuator position error signal in the usual manner.

In U.S. patent 4,238,809, Masao Fujiki et al discuss a servo tracking apparatus with a novel recursive servo burst pattern that allows derivation of both actuator velocity and direction from servo burst amplitude signals by testing pulse amplitude changes over time.

Practitioners in the art have also proposed substantial improvements to the basic phase-encoded servo tracking method known in the art. Phase-encoded tracking is disclosed by Frederick E. Axmear et al in U.S. patent 4,549,232. Axmear et al teach the use of a plurality of constant frequency fields each having a phase shift between tracks. Servo information is encoded in the phase of the servo pattern instead of the amplitude of the servo signal lobes. Multiple phase shifts per track are used to provide a sequentially changing signal phase as a function of radial data sensor actuator displacement.

Before the Axmear et al patent, Neils H. Hansen et al in U.S. patent 4,488,188, and Martin H. Dost et al in U.S. patent 4,490,756 disclosed a track seeking and following servo coding and detection system that employs a servo pattern using reference and control signals. Hansen et al teach the use of two frequencies, distinguishing a reference signal of one frequency from a control signal of another frequency. Adjacent control signals are recorded with 180o phase difference to facilitate discrimination. Hansen et al neither consider nor suggest the use of signal phase to determine actuator track location. Dost et al suggest a tetra-orthogonal phase relationship between adjacent control signals to facilitate discrimination of adjacent tracks. This phase relationship cyclically revolves by 90° from track to track, repeating the pattern every four tracks. However, Dost et al use the phase relationship to discriminate between control signals at a frequency elevated above the reference signal frequency and do not consider or suggest the phase-encoding features later disclosed by Axmear et al.

In U.S. patent 4,669,003, R. Frank Bell et al disclose a method and apparatus for eliminating DC offset in the servo code adjacent to a guard band on a magnetic memory disk. Bell et al use a phase-locked loop technique to lock onto a desired track with a two-phase guard band code in each sector.

In U.S. patent 4,811,135, Donald W. Janz discloses a three-phase servo pattern for data sensor actuator position control. Janz teaches the use of phase-encoded servo track offsets to provide improved signal amplitude discrimination and automatic gain control, thereby permitting use of servo patterns having a radial dimension greater than the distance between adjacent tracks.

In U.S. patent 5,041,926, Harold C. Ockerse et al disclose a system for eliminating track position syncopation in a DASD. Ockerse et al disclose a servo format for cancelling adjacent pulse influences, timing skews and amplitude sample decay. They propose a four-phase servo code disposed on a dedicated servo disk coupled to the other disks in the DASD and do not consider servo burst encoding of the data storage disks.

Despite intensive efforts by practitioners in the art, there remains a continuing clearly-felt need for improved spatial efficiency in DASDs using optical and magnetic media. This need is probably a direct result of the continuous improvements in DASD data density arising from reductions in inter-track spacing, increases in bit recording densities and improved sector-seeking and track-following actuator speeds. Until now, no method existed for improving head sensor actuator positioning precision while also reducing necessary servo burst and position coding data storage space.

These unresolved problems and deficiencies are clearly felt in the art and are solved by this invention in the manner described below.

### SUMMARY OF THE INVENTION

This invention makes use of both amplitude and phase information within the same servo burst pattern to derive both coarse track-positioning information and fine track-centering information from the same relatively short servo burst field.

Combining both amplitude and phase information within the same servo burst field produces a hybrid servo pattern. Decoding the phase information within the brief servo bursts of the hybrid servo pattern is made possible by addition of a reference phase signal to either the Write Recovery or Servo ID field within each sector. Use of the Write Recovery field for the reference phase signal is most efficient because it requires no additional disk space.

In operation, the amplitude and phase information is extracted simultaneously from each sector. First, the amplitude of each servo burst signal is determined. Secondly, the phase of the servo burst signal having the largest amplitude is decoded to identify the coarse actuator position. Finally, the amplitudes of two sequential servo burst signals are balanced to provide fine actuator tracking error information in the conventional manner.

It is a feature of this invention that the large phase distribution modulus of the hybrid servo burst signals provides a large cylinder identification modulus that permits efficient high-speed seeking without decoding a lengthy sector identification field.

It is an object of this invention to reduce the sector field space occupied by sector positioning information without losing actuator positioning precision. It is an advantage of this invention that the sector overhead space required for servo and identification fields is less than that required for either the conventional phase-encoded system or the conventional amplitude burst servo system alone.

The foregoing, together with other objects, features and advantages of this invention, will become more apparent when referring to the following specification, claims and the accompanying drawing.

### BRIEF DESCRIPTION OF THE DRAWING

For a more complete understanding of this invention, reference is now made to the following detailed description of the embodiments as illustrated in the accompanying drawing, wherein:
Fig. 1 shows the general format of sector location and identification fields known in the prior art.
Fig. 2 provides an illustrative embodiment of a quadrature amplitude servo burst pattern from the prior art;
Fig. 3 provides an illustrative embodiment of a phase-encoded servo pattern from the prior art;
Fig. 4 provides an illustrative embodiment of the hybrid servo pattern of this invention;
Fig. 5 provides an illustrative embodiment of the . hybrid servo pattern demodulation system of this invention and;
Fig. 6 shows a typical disk apparatus for which this invention is useful.

### DETAILED DESCRIPTION OF THE PREFERRED EMBODIMENTS

### The Servo Gap

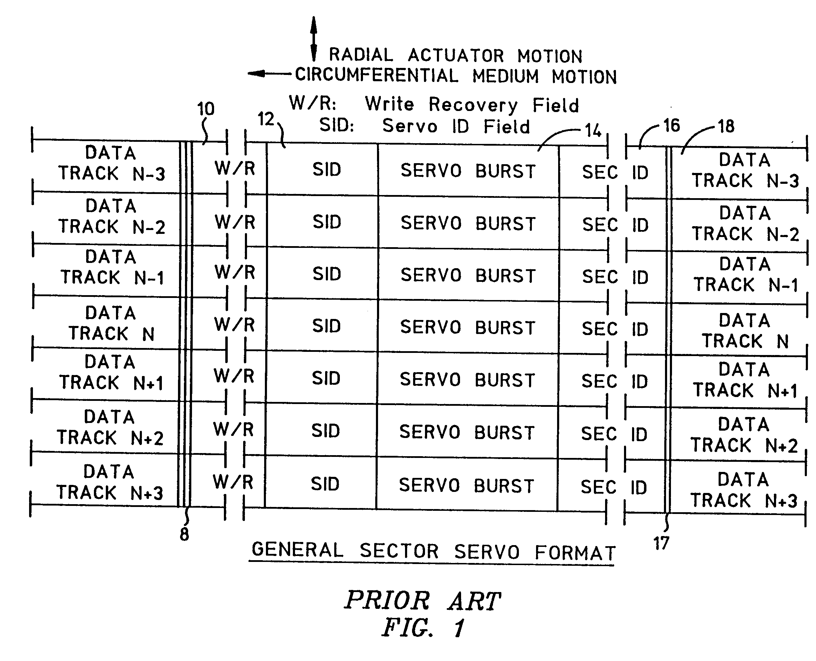

Fig. 1 illustrates the general format of the sector servo gap known in the art. Several radially adjacent sectors are disposed along a plurality of concentric tracks (N-3)-(N+3). These concentric tracks are illustrated in linear form for ease of understanding. They may have several such sectors or may be limited to a single sector around a concentric circle. Proceeding circumferentially from the sector start 8 on track (N-3), the Write Recovery (W/R) field 10 is first reserved to permit the data channel to switch from a write mode if necessary. This brief time delay is necessary when the data channel is switching from writing data in a preceded sector to reading data in the current sector.

Following W/R field 10 is the Servo Identification (SID) field 12, which contains data related to the type of servo pattern and demodulation system employed, such as servo burst timing data, and zone data for actuator position, such as whether the sector is an index sector or whether the sector is in or out of the data sector band. SID field 12 sometimes includes coarse cylinder position data typically written as a Gray Code number.

Following SID field 12 is the Servo Burst field 14, which contains either amplitude servo bursts (not shown) or phase-encoded servo bursts (not shown), depending on demodulation system implementation. Following servo burst field 14 is a Sector Identification (SECID) field 16, which is also denominated the Data Identification (DID) field in the art. SECID field 16 terminates at the gap end 17. Finally, the remainder of the sector is given over to a Data Field 18 containing the data that is intended for storage in the DASD file. In the sector beginning at start 8 on track (N-3), the "servo gap" consists of fields 10-16 in combination. The space allocated to this servo gap between start 8 and end 17 represents sector space that is unavailable for data storage.

### The Amplitude Burst Servo Pattern

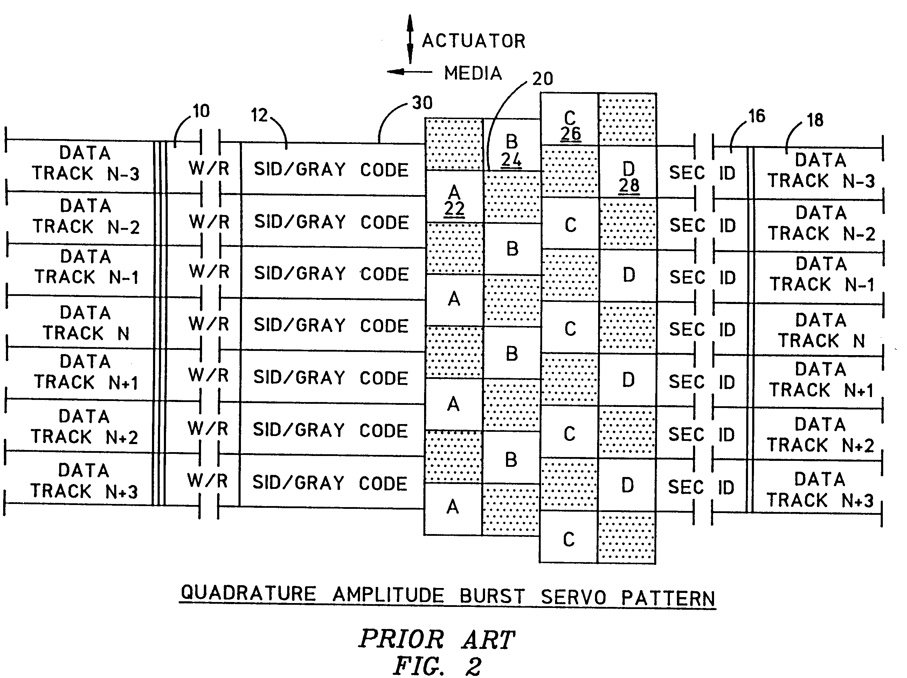

Fig. 2 provides a typical format known in the art for a quadrature amplitude burst servo pattern. The particular example uses four servo burst sub-fields (A, B, C and D) that have specific physical relationships among themselves and the radially adjacent tracks. The frequency and phase of these four bursts do not affect the demodulation system because this system considers only the relative amplitude of a single pair of circumferentially sequential bursts as it passes under the data sensor. The sensor actuator radial position with respect to a track centerline such as track centerline 20 is uniquely determined by the relative amplitudes of four servo bursts (A-D) such as the four servo bursts 22-28.

This process is readily understood by considering the relative amplitude of servo burst A22 and B24 measured by a sensor radially positioned at track centerline 20. Any movement of the sensor radially from centerline 20 decreases the amplitude of one servo burst and increases the amplitude of the other, resulting in a measured difference between the two amplitudes. The amplitude and sign of this difference are used to create a tracking error signal in any useful manner known in the art. Also, servo bursts C26 and D28 appear as a low or zero signal followed by a high amplitude signal to the sensor positioned on track centerline 20. Thus, the demodulator considers the sequence of a pair of nearly equal signals followed by a (0,1) sequence of signals to mean that the sensor actuator (not shown) is positioned over track centerline 20 instead of, say, track boundary line 30.

Similarly, a sensor actuator positioned over track boundary line 30 sees a (0,1) sequence of signals followed by two nearly equal signals generated from servo bursts C26 and D28. This reversed sequence allows the demodulator to distinguish between half-track sensor positions such as track boundary line 30 and full-track sensor positions such as track centerline 20. This discrimination capability relies on substantially identical relative amplitudes of bursts A22 and B24 such that a sensor positioned on track centerline 20 reads burst A22 and burst B24 as two sequential pulses having substantially the same amplitude. Normally, the servo burst signals are single-frequency sine waves having substantially random phase characteristics.

The servo gap illustrated in Fig. 2 employs a Gray Code in SID field 12 to assist with coarse sensor actuator positioning during track seeking operations. The Gray Code includes sufficient information to identify the individual cylinder number because the amplitude burst servo pattern discriminates only within cylinder blocks containing four half-track increments. The Gray Code is lengthy and consumes a significant amount of space within the servo gap for each sector. In Fig. 2, SID field 12 represents the primary source of cylinder number identification. In this example, each cylinder block consists of four half-track increments; that is, the cylinder block modulus is equal to two tracks. Alternative implementations that use less or no SID field Gray Code rely on the servo microprocessor (not shown) to keep track of the data cylinder number by counting track crossings without the help of cylinder information from the Gray Code.

### The Phase-Encoded Servo Pattern

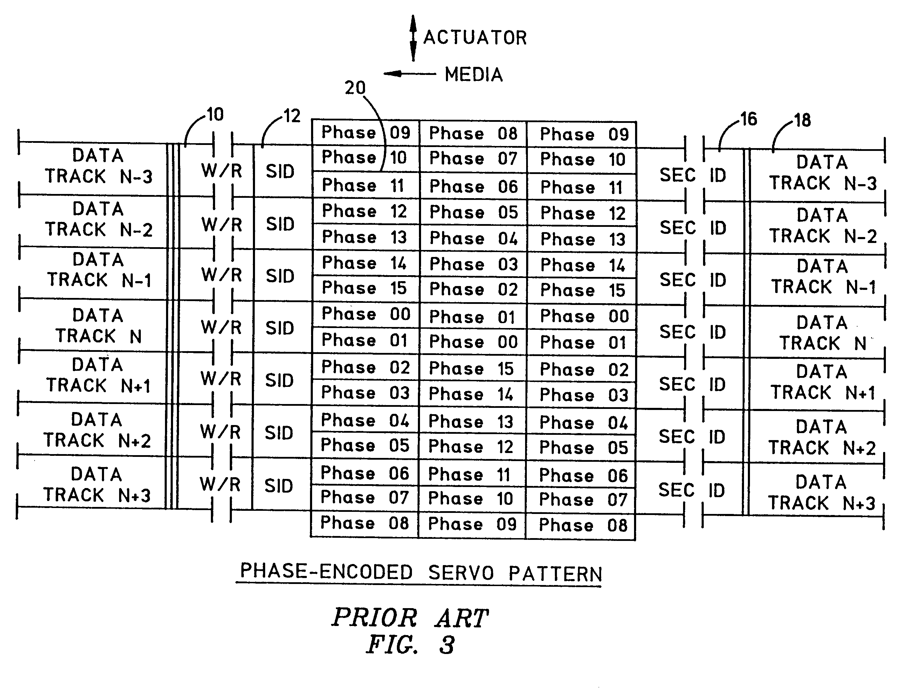

Fig. 3 shows a typical phase-encoded servo pattern from the prior art. In Fig. 3, the servo burst pattern relies on the phase of a single-frequency sine wave servo burst signal instead of the relative amplitude. Because a phase demodulator can discriminate among many different phase values, the cylinder block modulus can be increased beyond one or two tracks. Fig. 3 showns an eight track cylinder block modulus using sixteen different phase values disposed on sixteen half-tracks. This reduces the sector identification burden of SID field 12 to the identification of the particular eight-track block only, paring three bits from the Gray Code.

In the present art, the reverse order nature of the phase bursts limits the cylinder block modulus to four since only the difference phase between successive servo burst is used. However, a new reference phase written in the SID field could be used to discriminate among identical phase difference values with the method of this invention disclosed below.

Fig. 3 shows a Phase-Encoded Burst format having three successive servo bursts with sixteen possible phase values per burst disposed with a particular physical relationship to the data track centerlines and adjacent track boundaries. The phases are detected in the signals from the data sensor as the servo bursts pass under it. Detection requires lengthy burst fields to enable the phase detector (not shown) to accurately discriminate the phase. The signals are demodulated so that the phases of the first and third servo bursts are compared with the phase of the middle servo burst. The sensor actuator position within the cylinder block is uniquely determined by this relative servo burst phase comparison.

Note that the implementation shown in Fig. 3 employs no Gray Code in SID field 12. The phase-encoded servo pattern relies on the servo microprocessor (not shown) to account for all cylinder block crossings. With the eight-track cylinder modulus illustrated, the servo microprocessor need only count blocks of eight tracks.

The phase demodulator (not shown) detects a 360° phase change over sixteen radially adjacent servo burst fields. Because each servo burst field occupies a half-track radial width, this means the block modulus of this illustrated system is eight cylinders. That is, the phase pattern in data track (N-3) in Fig. 3 is repeated eight tracks later. Note that, when comparing the first and third bursts to the second burts in the present art, a 360° phase change occurs over four tracks because of the reverse order of the phases. If the phase of a burst is compared to a new reference signal in accordance with the method of this invention discussed below, this present limitation is avoided.

Track centering is normally accomplished by correcting the sensor actuator position responsive to either of the half-track phase sequences. For instance, in data track (N-3), a servo burst phase sequence of (10-07-10) indicates an inward tracking error whereas the servo burst phase sequence (11-06-11) indicates an outward tracking error from track centerline 20.

### The Hybrid Servo Pattern Invention

The problem solved by the servo pattern of this invention arises from the deficiencies in both the amplitude burst servo pattern and the phase-encoded servo pattern known in the art. Both coarse cylinder positioning information and fine track-following error information must be provided while minimizing the disk space consumed by the servo gap fields. The pattern and method of this invention permit a significant reduction in servo gap space requirements while improving both the coarse and fine positioning performances. In the previous art, only amplitude or phase information alone was used in the servo burst field, depending on the type of demodulation system employed.

The hybrid servo pattern of this invention is a combination of the amplitude burst and phase-encoded burst systems. The hybrid servo burst contains two types of signal information within the same burst, thereby increasing the spatial efficiency of the servo gap and improving both coarse and fine positioning resolution. The combination of amplitude and phase information permits a wider cylinder positional range and higher track-following positioning resolution than is independently attainable by either of the two known systems within a given servo gap space.

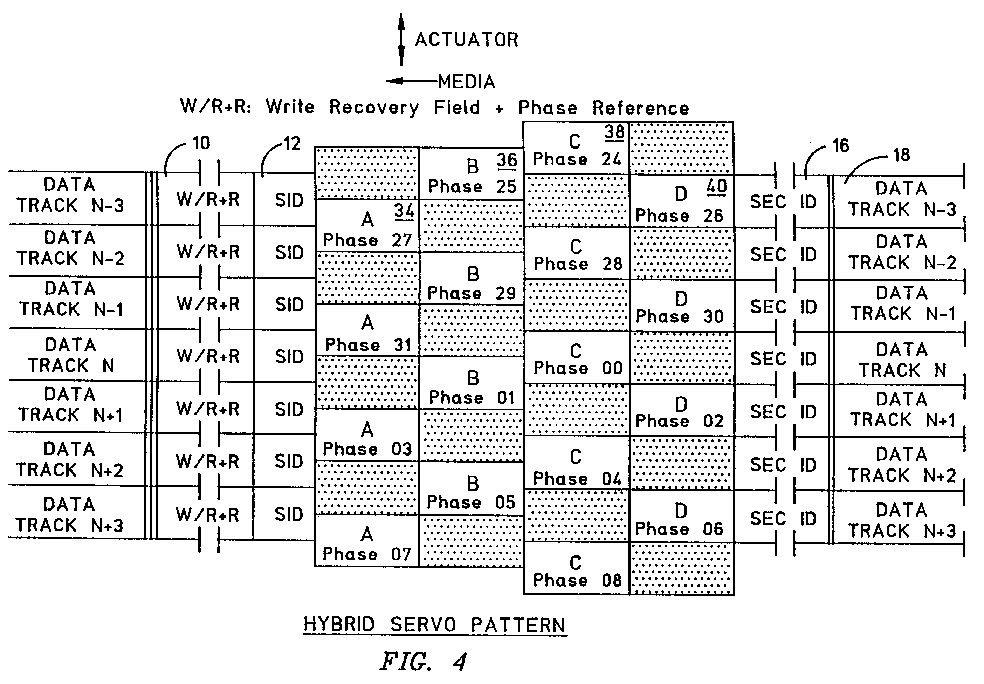

The hybrid servo pattern invention incorporates both amplitude and phase information within the same relatively short servo burst pattern. The amplitude servo bursts shown in Fig. 2 do not contain any particular phase information. Thus, the addition of phase-encoded information to the amplitude burst fields can be accomplished without affecting the conventional amplitude demodulation system because that system is generally phase insensitive. Combining both amplitude and phase information within the same servo burst produces the hybrid servo pattern system of this invention, which can be disposed in a track format such as the illustrative format shown in Fig. 4.

Because of signal brevity, proper decoding of the phase information within each hybrid servo burst requires a reference phase signal that is not suggested in the prior art. This reference phase signal should be recorded in each sector to permit demodulation of the phase components of the servo bursts shown in Fig. 4. The reference phase signal may be added to W/R field 10 as shown in Fig. 4 or may be added instead to SID field 12. Because the Write Recovery field generally has no informational content, it is the preferred location for adding the reference phase signal. Such addition requires no new disk space.

The pattern in Fig. 4 employs the same amplitude burst identifiers used in Fig. 2; servo bursts A, B, C and D. These are typified by the burst A34, the burst B36, the burst C38 and the burst D40 in Fig. 4. In this hybrid system, each burst is also is encoded with one of thirty-two different phases. For instance, burst A34 is encoded with phase-27. These phases vary as the sensor actuator moves radially from data track (N-3) through data track (N+3). Clearly, other variations of these amplitude and phase modulation combinations are also useful in view of these teachings.

In Fig. 4, the thirty-two distinct phases in the hybrid servo gap are separated in phase by 360°/32 = 11.25°. Because servo bursts A-D are written at half-track intervals, the cylinder identification modulus is sixteen cylinders (or thirty-two half-cylinders). The amplitude burst features of the illustrated hybrid servo pattern are the same as shown in Fig. 2.

The number of distinct phase values that can be used within a hybrid servo pattern depends on the phase resolution that can be effectively recorded on the magnetic or optical storage medium and the phase resolution specifications of the associated phase demodulator apparatus. In Fig. 4, the burst phases must be resolvable to within +/-5.625° of nominal value to be useful for cylinder identification purposes.

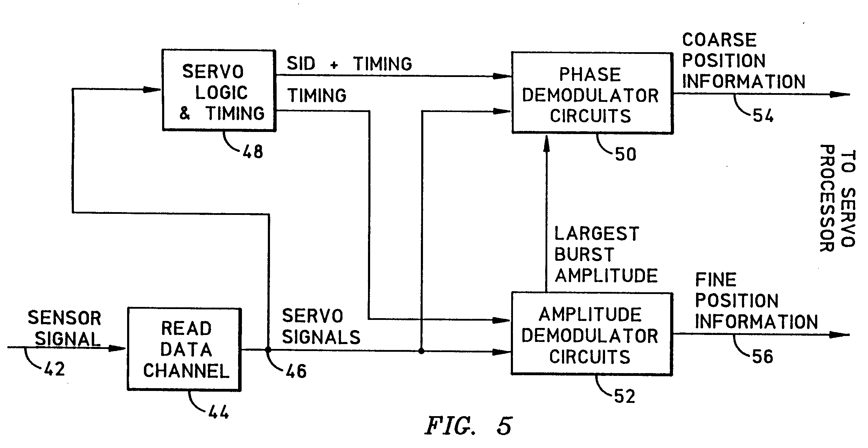

Fig. 5 provides a simple block diagram illustrating the hybrid servo demodulator apparatus of this invention. Sensor signal 42 arises from the read data sensor in any useful manner known in the art. Signal 42 is propagated through a read data channel 44, which separates the servo signal 46 from the data stream at signal 42. Signal 46 is then presented to a servo logic and timing circuit 48 and to the demodulator circuits 50 and 52.

The amplitude measurement of each servo burst is accomplished by amplitude demodulator circuit 52 in a manner similar to that known in the art. The phase of each servo burst sub-field A-D is compared to the phase reference recorded in W/R field 10 or SID field 12 in phase demodulator circuit 50. This may be accomplished in any useful manner known in the art such as zero-crossing timing detection, Discrete Fourier Transform phase detection, or the like.

After phase detection, the amplitude information from amplitude demodulator circuit 52 is used to identify the servo burst having the largest amplitude. The phase of this largest amplitude burst from phase demodulator circuit 50 is then provided to identify which servo burst is closest to the centerline of the read data sensor. This identity then serves as coarse position information 54, which is merely the sensor actuator track position to within one half-track. Simultaneously, amplitude demodulator circuit 52 performs a comparison of relative servo burst amplitudes in the manner known in the art, thereby providing fine position information 56, which is simply a track-following error signal. Fine position information 56 varies as a direct function of sensor actuator track-following misalignment.

In this manner, during high-speed track seeking operations, sufficient information is available from the phase-encoded portion of the servo burst to determine sensor actuator coarse position information 54 within a given cylinder block without the need for an extensive Gray Code. During the track-following operations, the same amplitude information that is available in a typical amplitude burst system (Fig. 2) is also available from amplitude demodulator circuit 52, providing excellent track-following error correction signals without need for more burst length.

Note that the thirty-two distinct phases shown in Fig. 4 provide a sixteen-track cylinder identification modulus, improving on the phase-encoded system shown in Fig. 3. More or fewer phase increments can be implemented depending upon the particular system requirements and the available capabilities for distinguishing between adjacent phases. Also, because the amplitude burst information alone suffices to determine cylinder location within a cylinder identification modulus of two, phase codes can be duplicated in radially adjacent servo bursts to double the effective cylinder identification modulus range with the same number of phase codes.

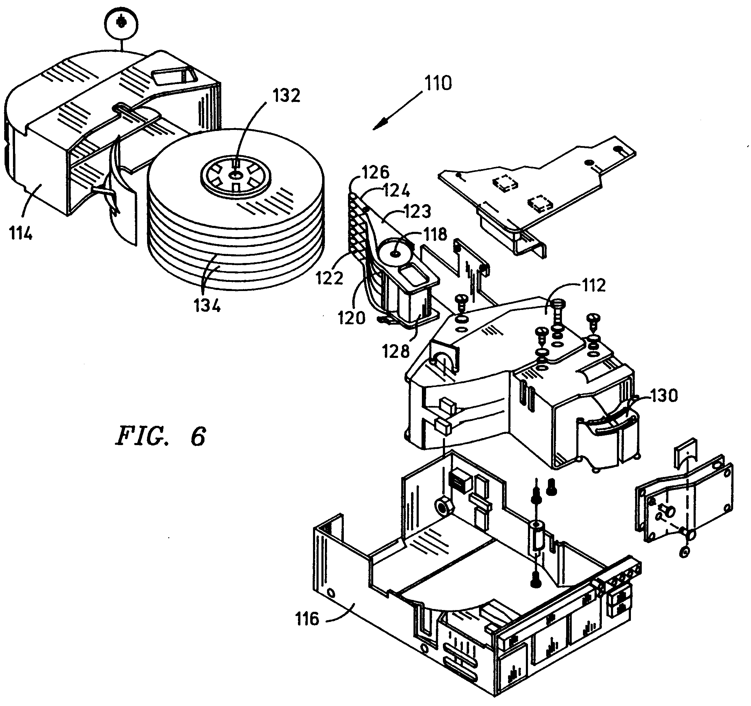

This invention is useful with all disk drive mechanical configurations and all Direct Access Storage Devices (DASDs). Fig. 6 is an exploded view of a disk drive 110. Disk drive 110 includes a housing 112 and a housing cover 114, which is mounted within a frame 116 after assembly. Rotatably attached within housing 112 on an actuator shaft 118 is an actuator arm assembly 120. Actuator arm assembly 120 includes an E-block or comb-like structure 122 having a plurality of arms 123. Attached to separate arms 123 on the comb or E-block 122, are load springs 124. Attached at the end of each load spring 124 is a slider 126 that carries a magnetic transducer (not shown). On the end of the actuator arm assembly 120 opposite load springs 124 and slider 126 is a voice coil 128.

Attached within housing 112 is a pair of magnets 130. Magnets 130 and voice coil 128 are key parts of a voice coil motor that applies a force to actuator assembly 120, thereby rotating it about actuator shaft 118. Also mounted within housing 112 is a spindle shaft 132. Rotatably attached to spindle shaft 132 are a number of disks 134. In Fig. 1, eight disks 134 are shown attached to spindle shaft 132. As shown in Fig. 1, disks 134 are attached to spindle shaft 132 in a spaced-apart relationship. The methods and patterns of this invention are readily applicable to all surfaces of disks 134.

Clearly, other embodiments and modifications of this invention will occur readily to those of ordinary skill in the art in view of these teachings. Therefore, this invention is to be limited only by the following claims, which include all such embodiments and modifications when viewed in conjunction with the above specification and accompanying drawing.

## Claims

1. In a Direct Access Storage Device (DASD), the improvement comprising:
a rotatable data storage disk having a plurality of concentric tracks, each said track being disposed about a track centerline partitioned into one or more sectors, each said sector having a servo phase reference signal field and a servo gap; and
a servo code pattern recorded in each said servo gap, said servo code pattern having a plurality of single-frequency servo burst signals, each said servo burst signal having a servo signal amplitude and a servo signal phase shift with respect to said servo phase reference signal, wherein said each signal shift delay differs by one of a plurality of predetermined amounts from said servo signal phase shift of every said servo burst signal in the same said sector and in all radially adjacent said sectors and said each servo signal amplitude is substantially equal to said servo signal amplitude of every said servo burst signal in all radially adjacent said sectors.

2. The improvement of Claim 1 wherein each said servo code pattern comprises: four servo burst signals, where two said signals are disposed on radially opposing sides of said track centerline and two said servo burst signals are disposed on radially opposing sides of a line located midway between two adjacent said track centerlines.

3. A disk drive of the type having one or more rotatable data storage disks and a data sensor actuator for reading data from said disks, each said disk having a plurality of concentric tracks, each said track being disposed about a track centerline partitioned into one or more sectors, each said sector having at least one servo gap, said disk drive comprising:
a servo code pattern recorded in each said servo gap, said servo code pattern having a plurality of servo burst signals, each said servo burst signal having amplitude and phase; phase demodulator means for detecting said servo burst signal phase for use in determining the position of said sensor actuator; and amplitude demodulator means for detecting said servo burst signal amplitude for use in determining the position of said sensor actuator.

4. The improvement of Claim 1, 2 and 3 wherein:
said servo burst signals span a radial width substantially equivalent to the radial distance between adjacent said track centerlines.

5. The improvement of Claim 1 and 4 wherein:
said each servo gap is radially aligned with said servo gaps in every radially adjacent said sector.

6. The disk drive of Claim 3 wherein each said sector further comprises:
a servo burst phase reference signal for comparison with each said servo burst signal to determine the relative value of said each servo burst signal phase shift.

7. The disk drive of Claim 6 wherein
each said servo code pattern comprises: four servo burst signals, where two said signals are disposed on radially opposing sides of said track centerline and two said servo burst signals are disposed on radially opposing sides of a line located midway between two adjacent said track centerlines.

8. The disk drive of Claim 7 wherein:
said servo burst signals span a radial width substantially equivalent to the radial distance between adjacent said track centerlines.

9. The disk drive of Claim 3 and 8 wherein:
said each servo gap is radially aligned with said servo gaps in every radially adjacent said sector.

10. The disk drive of Claim 3 wherein each said servo code pattern comprises:
four servo burst signals, where two said signals are disposed on radially opposing sides of said track centerline and two said servo burst signals are disposed on radially opposing sides of a line located midway between two adjacent said track centerlines.

11. A track-locating and track-following method in a DASD of the type having at least one rotatable data storage disk having a plurality of concentric tracks, each said track being disposed about a track centerline partitioned into one or more sectors, each said sector having at least one sector identification field, a phase reference signal and a plurality of single-frequency servo burst signals disposed in predetermined relationship to said each track centerline, each said servo burst signal having amplitude and phase, said DASD having a data sensor actuator disposed to move radially across said rotatable data storage disk when seeking a target track, said method comprising the unordered steps of:
(a) performing, for each said sector that rotates under said sensor actuator, the steps of
(a.1) measuring the amplitudes of a first plurality of said servo burst signals in said each sector;
(a.2) selecting a first said servo burst signal having the greatest said amplitude among said first plurality of servo burst signals;
(a.3) subtracting the phase of said first servo burst signal from the phase of said phase reference signal in said each sector to obtain a sensor actuator cylinder location;
(a.4) combining said sensor actuator cylinder location with data from said sector identification field in said each sector to obtain an actuator track position; and
(a.5) combining the amplitude of a second said servo burst signal with the amplitude of a third said servo burst signal to obtain an actuator tracking error signal;
(b) moving said data sensor actuator radially until said actuator track position is equal to said target track; and
(c) moving said data sensor actuator radially until said actuator tracking error signal is substantially zero.

12. The method of Claim 11 wherein:
said each sector includes four servo burst signals disposed at radial intervals less than or equal to half of the radial distance between adjacent said track centerlines.

13. A disk drive comprising:
a mounting frame;
a housing cover rigidly mounted within said mounting frame;
a housing mounted within said housing cover;
an actuator arm assembly rotatably attached within said housing;
a plurality of arms attached to said actuator arm assembly;
a plurality of magnetic transducers, each said transducer attached to one said arm;
a plurality of rigid magnetic disks rotatably mounted within said housing, each said rigid disk having a plurality of concentric tracks, each said track being disposed about a track centerline partitioned into one or more sectors, each said sector having at least one servo gap;
voice coil motor means mounted within said housing and attached to said actuator arm assembly such that each said transducer is positioned over the surface of one said rigid disk to sense data stored on said concentric tracks;
a servo code pattern recorded in each said servo gap, said servo code pattern having a plurality of servo burst signals, each said servo burst signal having amplitude and phase;
phase demodulator means for detecting said servo burst signal phase for use in determining the position of said each transducer; and
amplitude demodulator means for detecting said servo burst signal amplitude for use in determining the position of said each transducer.

14. A disk drive comprising:
a mounting frame;
a housing cover rigidly mounted within said mounting frame;
a housing mounted within said housing cover;
an actuator arm assembly rotatably attached within said housing;
a plurality of arms attached to said actuator arm assembly;
a plurality of magnetic transducers, each said transducer attached to one said arm;
a plurality of rigid magnetic disks rotatably mounted within said housing, each said rigid disk having a plurality of concentric tracks, each said track being disposed about a track centerline partitioned into one or more sectors, each said sector having a servo phase reference signal field and a servo gap;
voice coil motor means mounted within said housing and attached to said actuator arm assembly such that each said transducor is positioned over the surface of one said rigid disk to sense data stored on said concentric tracks; and
a servo code pattern recorded in each said servo gap, said servo code pattern having a plurality of single-frequency servo burst signals, each said servo burst signal having a servo signal amplitude and a servo signal phase shift with respect to said servo phase reference signal, wherein said each signal phase shift differs by one of a plurality of predetermined amounts from said servo signal phase shift of every said servo burst signal in the same said sector and in all radially adjacent said sectors and said each servo signal amplitude is substantially equal to said servo signal amplitude of every other servo burst signal in all radially adjacent said sectors.
